# EUROPEAN PATENT APPLICATION

(11) **EP 0 919 915 A2**
(43) Date of publication of application: **02.06.1999**
(21) Application number: 98109800.7
(22) Date of filing: 28.05.1998
(51) Int. Cl.: G06F 11/14

(54) **Information protection method for network system**

(30) Priority: 06.11.1997 JP 304361/97
(71) Applicant: FUJITSU LIMITED, Kawasaki-shi, Kanagawa 211-8588 (JP)
(72) Inventor: Yamagishi, Noriaki, Nakahara-ku, Kawasaki-shi, Kanagawa 211 (JP); Mizutani, Yasunao, Nakahara-ku, Kawasaki-shi, Kanagawa 211 (JP)
(74) Representative: Schmidt-Evers, Jürgen, Dipl.-Ing.

(57) **Abstract**

In a network system (1) in which a client terminal (3) and a server (4) are connected through a network (2), saving information (27) of the client terminal is saved in either the client terminal or the server selectively, when the client terminal stops, and the saving information saved in either the client terminal or the server selectively is returned to the client terminal when the client terminal starts.

## Description

### BACKGROUND OF THE INVENTION

### 1. Field of the Invention

The present invention relates to an information protection method for a network system and information processing apparatuses used therein, and, in particular, to an information protection method for a network system and information processing apparatuses used therein, in which information which is otherwise deleted when a client terminal stops is protected.

Recently, a portable terminal apparatus is used for management of goods in works for supplementing and ordering goods in a shop, works for stocktaking and checking goods in a warehouse and so forth.

The portable terminal apparatus is carried by a person when the person performs works. Then, each time when information occurs in a site, the information is input to the portable terminal apparatus .

The information input to the portable terminal apparatus is transmitted to a host computer through communicating means. The host computer manages the information transmitted from such portable terminal apparatuses collectively.

As such a system, there are various systems from a system including a host computer and one or two sets of terminal apparatuses in a small-scale shop such as a convenience store to a system including a host computer and tens of sets of terminal apparatuses in a department store, a large warehouse or the like. Generally, a manager who can manage a large-scale infrastructure independently constructs a network (such as a LAN or a WAN).

In such a situation, various user applications may be used, and the number of cases in which heavy loads of an OS are loaded in the terminals increases. Thereby, power consumption of the whole system increases. However, because of its portability, it is not possible that such a portable terminal apparatus has a battery of a large capacity. Therefore, it is important, when the system is operated, to effectively use a small capacity of a battery.

When such a portable terminal apparatus driven by a battery is used, a time period for which the apparatus can be used (operated) is limited. After the apparatus has been used for a certain time, the battery should be replaced with a new one. Alternatively, when a rechargeable battery is used, charging of the battery is needed. However, in the case where the used battery is replaced with a new one, it is necessary to carry the new battery. In the case that the rechargeable battery is used, a commercial power supply is needed and a certain time is required for charging the battery. Therefore, it is demanded that the number of battery replacement works or battery charging works be decreased as much as possible.

Accordingly, by supplying power only when operation of the apparatus is necessary and disconnecting the power supply immediately after the operation of the terminal is finished, the power consumption of the battery is reduced to a minimum, and the time for which the terminal can be operated is elongated.

However, in the portable terminal apparatus, when the power supply is started again after the power supply was stopped, it is necessary to return the condition of the apparatus to that present immediately before the power supply was stopped. However, generally speaking, when the power supply to a computer is disconnected without any preparation, the information input to the computer until then is deleted and all the setting on the hardware is deleted.

Therefore, in such a type of a portable terminal apparatus, it is necessary to save the information obtained through the operation of the apparatus before the power supply is stopped so that the application can be normally executed after the power supply is started again.

### 2. Descriptions of the Related Art

Hitherto, for storing necessary information, a non-volatile storage device such as an SRAM which can keep the contents after the power supply is disconnected has been used. However, as a total amount of information increases, a highly integrated volatile storage device such as a DRAM is used as a large-capacity semiconductor device.

Information stored in the volatile storage device such as a DRAM up to the present is deleted when the power supply thereto is disconnected. Therefore, it is necessary to continuously supply power to the DRAM so that the information in the DRAM can be kept after the power supply to the other parts is disconnected.

Accordingly, when the DRAM is used, battery power is consumed after the power supply to the other parts is disconnected, and a life of the battery is shortened.

In order to prevent the power of the battery from being consumed, an automatic stopping system for a network system has been proposed in Japanese Laid-Open Patent Application No.6-12358.

In the automatic stopping system for a network system disclosed in Japanese Laid-Open Patent Application No.6-12358, when a client terminal is stopped, the information stored in a memory of the client terminal is stored in an external storage device of a server. Then, when the client terminal starts, the information saved in the external storage device is read and developed in the memory of the client terminal. Thereby, the client terminal is returned to the condition present before the client terminal was stopped.

However, in the automatic stopping system for a network system disclosed in Japanese Laid-Open Patent Application No.6-12358, the client terminal has the volatile memory, the information stored in the memory is transmitted to the server when the terminal stops, the information is stored in the external storage device, and thereby, deletion of the information is avoided. Therefore, in a condition where the client terminal cannot perform communication with the server, the information is deleted when the client terminal stops.

### SUMMARY OF THE INVENTION

The present invention has been devised in consideration of the above-mentioned problem, and an object of the present invention is to provide an information protection method for a network system and information processing apparatuses used therein, in which data is surely saved.

To achieve the above-mentioned object, there is provided an information protection method for a network system, according to the present invention, in which a client terminal and a server are connected through a network, wherein:
saving information (the term 'saving information' meaning information to be saved, hereinafter) of the client terminal is saved in either the client terminal or the server selectively, when the client terminal stops; and
the saving information saved in either the client terminal or the server selectively is returned to the client terminal when the client terminal restarts.

In the above-described arrangement, when the client terminal stops, the saving information is saved in either the client terminal or the server selectively. Then, when the client terminal restarts, the information selectively saved in the client terminal or the server is returned to the client terminal. Thereby, because where the saving information is to be saved can be selected in accordance with the current situation, the saving information of the client terminal can be saved in an optimum method in accordance with various situations.

Identification information for identifying the client terminal may be attached to the saving information and the saving information is transmitted to the server, when the server is selected to have the saving information saved therein.

In this arrangement, by attaching the identification information for identifying the client terminal to the saving information and transmitting the saving information to the server, when the server manages the saving information from a plurality of such client terminals, the necessary saving information is surely returned to the client terminal from the server.

The identification information and the saving information may be included in a command, which causes the saving information to be saved when the client terminal stops, and the command is transmitted to the server; and
a command, which causes the server to return the saving information to the client terminal when the client terminal starts, may include the identification information and the command is transmitted to the server.

In this arrangement, the server can recognize whether the saving information is to be saved or is to be returned to the client terminal, and can easily cope with saving and returning the saving information for a plurality of such client terminals.

A plurality of such client terminals may have the saving information in common.

The client terminal may transmit, to the server, proprietary-right information for setting whether or not the saving information is to be held in the server when the client terminal stops; and
the server determines whether or not the saving information is transmitted to the client terminal, in accordance with the proprietary-right information.

In this arrangement, it is possible to return the saving information to a predetermined client terminal of a plurality of such client terminals.

An information processing apparatus, according to the present invention, having a client terminal connected therewith through a network and performing communication with the client terminal, is characterized in that the apparatus comprises:
network controlling means for controlling connection with the client terminal;
saving information storing means for storing saving information of the client terminal, the saving information being supplied to said means through the network controlling means; and
selecting means for selecting whether the saving information is to be saved in the client terminal or in the saving information storing means.

In this arrangement, when the client terminal stops, the saving information is saved in the client terminal or the server selectively. Then, when the client terminal starts, the information selectively saved in the client terminal or server is returned to the client terminal. Thereby, because where the saving information is to be saved can be selected in accordance with the current situation, the client terminal can save the saving information in an optimum method in accordance with various situations.

Another information processing apparatus, according to the present invention, having a server connected therewith through a network and performing communication with the server, is characterized in that the apparatus comprises:
saving information transmitting means for transmitting to the server a saving command for saving saving information when the apparatus stops, the saving command including identification information and the saving information; and
returning means for transmitting to the server a returning command for returning the saving information to the apparatus when the apparatus starts, the returning command including the identification information, and returning the apparatus in the condition present before the apparatus stopped, in accordance with the saving information which is supplied from the server in response to the returning command.

In this arrangement, the server can recognize whether the saving information is to be saved or is to be returned to the apparatus, and it is easy to cope with saving and returning for a plurality of such apparatuses.

Other objects and further features of the present invention will become more apparent from the following detailed description when reed in conjunction with the accompanying drawings.

### BRIEF DESCRIPTIONS OF DRAWINGS

FIG.1 shows a block diagram of one embodiment of the present invention;
FIG.2 shows a processing flowchart of suspending processing in a client terminal apparatus in the embodiment of the present invention;
FIG.3 shows an operation explanation diagram of information holding destination selection in the embodiment of the present invention;
FIG.4 shows a data arrangement of data transmitted from the client terminal apparatus to a server apparatus in the suspending processing in the embodiment of the present invention;
FIG.5 shows a processing flowchart in suspending processing of the server apparatus in the embodiment of the present invention;
FIGS.6A and 6B show data arrangements of management tables of the server apparatus in the embodiment of the present invention;
FIG.7 shows a processing flowchart of resuming processing of the client apparatus in the embodiment of the present invention;
FIGS.8A, 8B and 8C show operation explanation diagrams for the resuming processing of the client terminal apparatus in the embodiment of the present invention;
FIG.9 shows a processing flowchart of resuming processing of the server apparatus in the embodiment of the present invention; and
FIGS.10A and 10B show operation explanation diagrams in the embodiment of the present invention.

### DETAILED DESCRIPTIONS OF THE PREFERRED EMBODIMENT

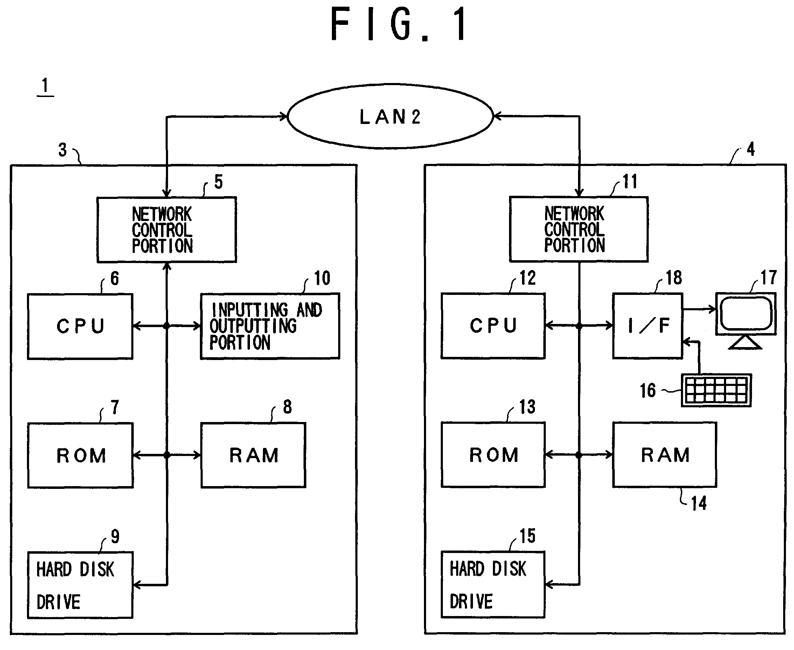

FIG.1 shows a block diagram of one embodiment of the present invention.

In a network system 1 in the embodiment, a client terminal apparatus 3 and a server apparatus 4 are connected through LAN circuits 2.

The client terminal apparatus 3 is formed of a mobile computer or the like, and includes a network control portion 5 which performs communication with the LAN circuits 2, a CPU 6 which processes information, a ROM 7 which stores control programs such as a BIOS and so forth, a RAM 8 which stores a currently executed program and temporarily stores processed data, a hard disk drive 9 which stores an OS, programs, data and So forth, and an inputting and outputting portion 10 which is used for inputting data and indicates data. The client terminal apparatus 3, when suspending and resuming, performs a suspending/resuming processing, to be described later, through the BIOS stored in the ROM 7.

The RAM 8 is formed of a volatile storage device, such as a DRAM, having a relatively large capacity. When power is supplied to the client terminal apparatus 3, a program executed by the CPU 6 is developed in the RAM 8, various data generated as a result of the program being executed is also stored in the RAM 8, and the RAM 8 is used as a work area of the CPU 6. When the power supply to the client terminal apparatus 3 is disconnected, the information, stored in the RAM 8 until then, is deleted.

The inputting and outputting portion 10 has, for example, an arrangement in which a touch panel is placed on a liquid crystal display. Indication is performed through the liquid crystal display and data is input through the touch panel.

The server apparatus 4 is formed of a server computer or the like, and includes a network control portion 11 which performs communication with the LAN circuits 2, a CPU 12 which processes information, a ROM 13 which stores control programs such as the BIOS and so forth, a RAM 14 which stores a currently executed program and temporarily stores processed data, a hard disk drive 15 which stores an OS, programs, data and so forth, a keyboard 16 for inputting data, a display 17 which indicates data, an inputting and outputting interface 18 which is used for inputting and outputting data, and so forth. The server apparatus 4, when suspending and resuming, performs a suspending/resuming processing, to be described later, through the BIOS stored in the ROM 13.

The server apparatus 4, in response to a request from the client terminal apparatus 3, supplies various data to the client terminal apparatus 3 through the LAN circuits 2. Further, at the time of execution of suspending/resuming processing of the client terminal apparatus 3, the server apparatus 4 executes the suspending/resuming processing in response to a request by the client terminal apparatus 3.

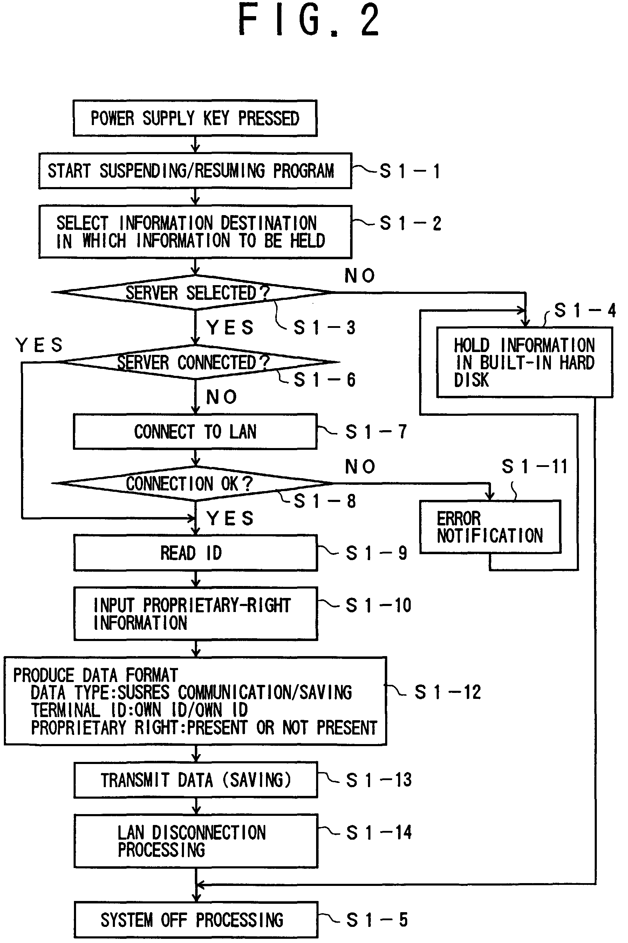

FIG.2 shows a processing flowchart when the CPU 6 of the client terminal apparatus 3 performs suspending processing.

When a power supply key provided on the inputting and outputting portion 9 is pressed by an operator, and turning off the power supply is instructed in the condition where power is supplied to the client terminal apparatus 3, the CPU 6 of the client apparatus 3 starts a suspending program which is included in the BIOS (step S1-1).

When execution of the suspending program is started in the step S1-1, where the information in the RAM 3 is to be held in is selected (step S1-2). In the step S1-2, a picture, for selecting whether the information in the RAM 8 is to be held in the built-in hard disk drive 9 or on the server apparatus 4 side, is indicated on a display of the inputting and outputting portion 10.

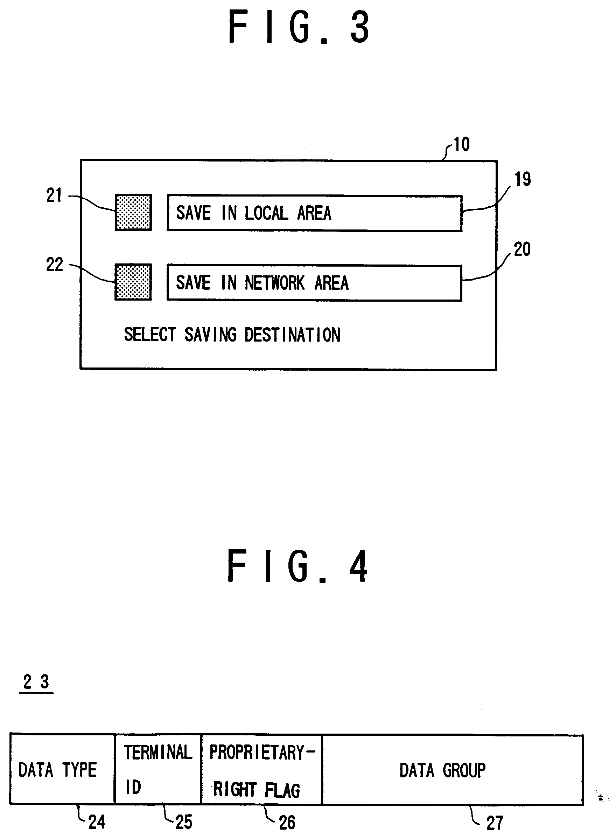

FIG.3 shows an operation explanation diagram of information holding destination selection in the embodiment of the present invention.

On the display of the inputting and outputting portion 10, as shown in FIG.3, an indication 19 indicates that the information stored in the RAM 8 is to be saved in the local area (SAVE IN LOCAL AREA), that is, is to be saved in the built-in hard disk drive 9, and an indication 20 indicates that the information stored in the RAM 8 is to be saved in the network area (SAVE IN NETWORK AREA), that is, is to be saved in the server apparatus 4.

In proximity of the indications 19 and 20, operation buttons 21 and 22 are indicated. As a result of the operation button 21 provided in proximity of the indication 19 being touched, selection is performed so that the information stored in the RAM 8 is saved in the local area (SAVE IN LOCAL AREA), that is, is saved in the built-in hard disk drive 9. As a result of the operation button 22 provided in proximity of the indication 20 being touched, selection is performed so that the information stored in the RAM 8 is saved in the network area (SAVE IN NETWORK AREA), that is, is saved in the server apparatus 4.

When the selection is performed so that the information stored in the RAM 8 is saved in the local area (SAVE IN LOCAL AREA), that is, is saved in the built-in hard disk drive 9 as a result of the step S1-2 (step S1-3), the information stored in the RAM 8 is saved in the built-in hard disk drive 9 (step S1-4), and system OFF processing for turning off the system is performed (step S1-5).

When the selection is performed so that the information stored in the RAM 8 is saved in the network area (SAVE IN NETWORK AREA), that is, is saved in the server apparatus 4 (step S1-3), it is determined whether or not the server apparatus 4 is connected with the client terminal apparatus 3 (step S1-6).

When the server apparatus 4 is not connected with the client terminal apparatus 3 in the step S1-6, LAN connecting processing is performed, the network control portion 11 is connected with the LAN circuits 2 and connection with the server apparatus 4 is performed (step S1-7).

When the connection is finished in the step S1-7 (step S1-8), an identification number (ID) of this client terminal apparatus 3 is read from the hard disk drive 9 or the ROM 7, and also, the data in the RAM 8 is read (steps S1-9, S1-10). When connection with the server apparatus 4 cannot be performed in the step S1-8, error notification is supplied to the inputting and outputting portion 10 (step S1-11). After the supply of the error notification, the information in the RAM 8 is saved in the built-in hard disk drive 9 (S1-4) and the processing for turning off the system is performed in (step S1-5).

Based on the identification number and data of the RAM 8 read in the steps S1-9 and S1-10, transmission data in a predetermined data format is produced (step S1-12).

FIG.4 shows a data arrangement of the data to be transmitted to the server apparatus 4 in the suspending processing in the first embodiment of the present invention.

The transmission data 23 includes an identification flag 24 for identifying that the subsequent data group is communication data for the suspending/resuming processing, a terminal identification number 25, for identifying this client terminal apparatus, which has been read in the step S1-9, a proprietary-right flag 26 which sets whether or not access from other client terminal apparatuses is permitted, and the data group 27 (saving information) read from the RAM 8.

The identification flag 24 is used for identifying that the data group is communication data for the suspending/resuming processing, and also, for identifying either suspending or resuming.

In the terminal identification number 25, two types of information can be set. One of the two types of information is an identification number special to this client apparatus 3. The other one is used for requesting the server apparatus 4 to connect the server apparatus 4 with this client apparatus 3. The terminal identification number 25 is not limited to the above-mentioned ones.

The proprietary-right flag 26 is a flag for identifying, when the data is saved in the server apparatus 4, whether or not access to this data from other client terminal apparatuses is permitted. The proprietary-right flag 26 is, as system setting information of the client terminal apparatus 2, set through the BIOS, stored in the ROM 13 or the like, and read when it is necessary. The setting may be performed by an operator each time when the data is transmitted.

The client terminal apparatus 3, in the suspending processing, transmits the transmission data shown in FIG.4 to the server apparatus 4 through the LAN circuits 2.

The server apparatus 4, when receiving the transmission data from the client terminal apparatus 3, performs the suspending processing.

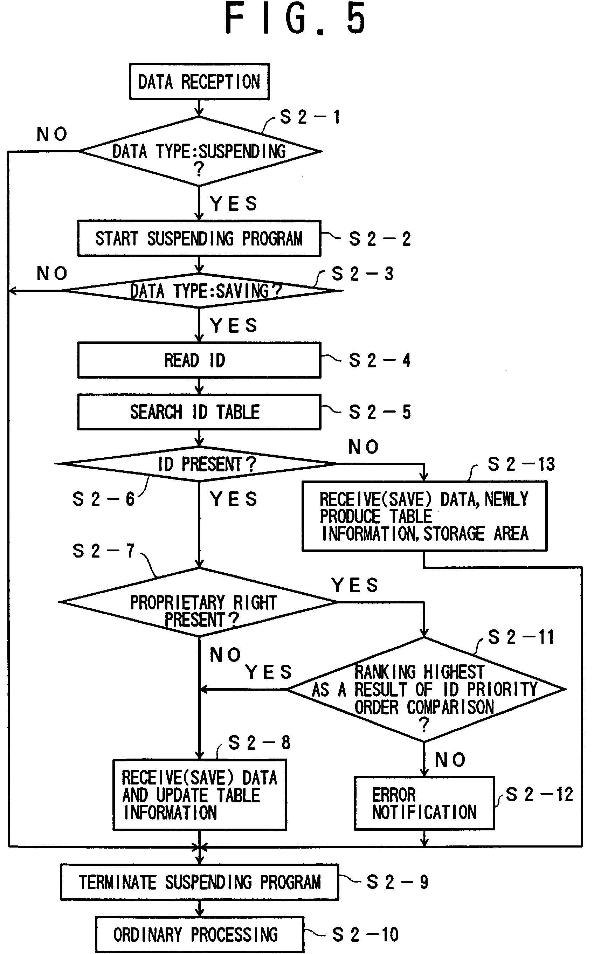

FIG.5 shows a processing flowchart of the suspending processing of the server apparatus 4 in the embodiment of the present invention.

When the transmission data, requesting the suspending processing, such as that shown in FIG.4, is received from the client terminal apparatus 3, the server apparatus 4 refers to the identification flag 24 and determines whether or not the suspending processing is to be performed (in a step S2-1).

Then, when it is determined in the step S2-1 that the suspending processing is to be performed, the suspending program is started (step S2-2).

When the suspending program is started in the step S2-2, the server apparatus 4 refers to the identification flag 24 of the transmission data, and determines whether or not the data is to be saved in the server apparatus 4 (step 2-3).

When it is determined that the data is to be saved in the server apparatus 4, then, the terminal identification number 25 of the transmission data 23 shown in FIG.4 is read (step S2-4). The server apparatus 4 refers to an ID number table set in the server apparatus 4 and searches for the area corresponding to the terminal identification number 25 read in the step S2-4 (step S2-5).

In the hard disk drive 15 of the server apparatus 4, a saving information storage area for storing the information (saving information) from the client terminal apparatus 3 and the ID number table in which, for each terminal identification number 25, the proprietary-right flag and a pointer indicating the storage address in the saving information storage area are set, are provided.

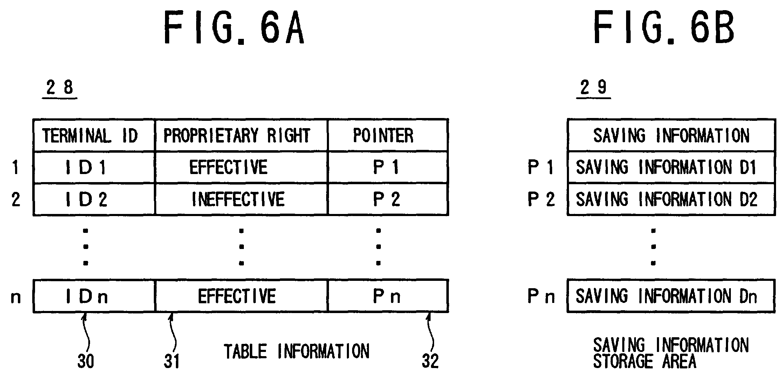

FIGS.6A and 6B show data arrangements of the ID number table and saving information storage area in the server apparatus 4 in the embodiment of the present invention. FIG.6A shows the ID number table, and FIG.6B shows the saving information storage area.

The ID number table 28 includes a terminal ID storage area 30 for storing the terminal identification numbers 25, a proprietary-right flag storage area 31 for storing the proprietary-right flags 26, and a pointer storage area 32 for storing the pointers indicating the storage addresses of the saving information in the saving information storage area.

In the saving information storage area 29, the saving information is stored corresponding to the storage addresses.

When the terminal identification number 25 included in the transmission data transmitted from the client terminal apparatus 3 is present in the terminal ID storage area 30 as a result of the reference to the ID number table 28 in the step 2-5 (step 2-6), then, as a result of the area of the proprietary-right flag storage area 31 corresponding to the terminal identification number 25 being referred to, whether the proprietary-right flag 26 is effective or ineffective is determined (step S2-7).

When the proprietary-right flag 26 for the terminal identification number 25 is ineffective in the step S2-7, the saving information of the transmission data 23 transmitted from the client terminal apparatus 3 is stored, in the saving information storage area 29, at the address pointed to by the pointer which is set for the corresponding terminal identification number 25 in the ID number table 28. The ID number table 28 is updated in accordance with the transmission data 23 (S2-8).

When the transmission data 23 is stored in the saving information storage area 29 in the step S2-8, the server apparatus 4 terminates the suspending program and returns to perform ordinary processing (step S2-9, S2-10).

When the proprietary-right flag 26 in the ID number table 28 for the terminal identification number 25 is effective in the step S2-7, the server apparatus 4 determines the priority order of a group of the client terminal apparatuses having different terminal identification numbers and having the same saving information in common in a case where the state of the proprietary-right flag 26 of the saving information is effective and the saving information is held by the group of the client terminal apparatus in common, in accordance with a predetermined rule previously set in the server apparatus 4 (step S2-11). When the priority of the client terminal apparatus 3 is highest among the priorities of the group of the client terminal apparatuses, the saving information of the transmission data 23 transmitted from the client terminal apparatus 3 is stored, in the saving information storage area 29, at the address pointed to by the pointer set for the corresponding terminal identification number 25 in the ID number table 28. The ID number table 28 is updated in accordance with the transmission data (S2-8).

When the priority of the client terminal apparatus 3 is not highest among the priorities of the above-mentioned group of client terminal apparatuses in the step S2-11, the server apparatus 4 supplies an error notification to the client terminal apparatus 3 (step S2-12).

Further, when the terminal identification number 25 included in the transmission data 23 is not included in the ID number table 28 in the step S2-6, the saving information is stored in a vacant area of the saving information storage area 29. Then, a terminal identification number 25 and a proprietary-right flag 26 of the transmission data 23, and a pointer pointing the address at which the saving information has been stored in the saving information storage area 29 are newly produced in the ID number table 28 (step S2-13).

When the transmission data 23 is stored in the saving information storage area 29 in the step S2-13, the server apparatus 4 terminates the suspending program and returns to perform the ordinary processing (the steps S2-9, S2-10).

Thus, the suspending processing in the server apparatus 4 side is finished.

The resuming processing will now be described.

The resuming processing is performed when power is supplied to the client terminal apparatus 3.

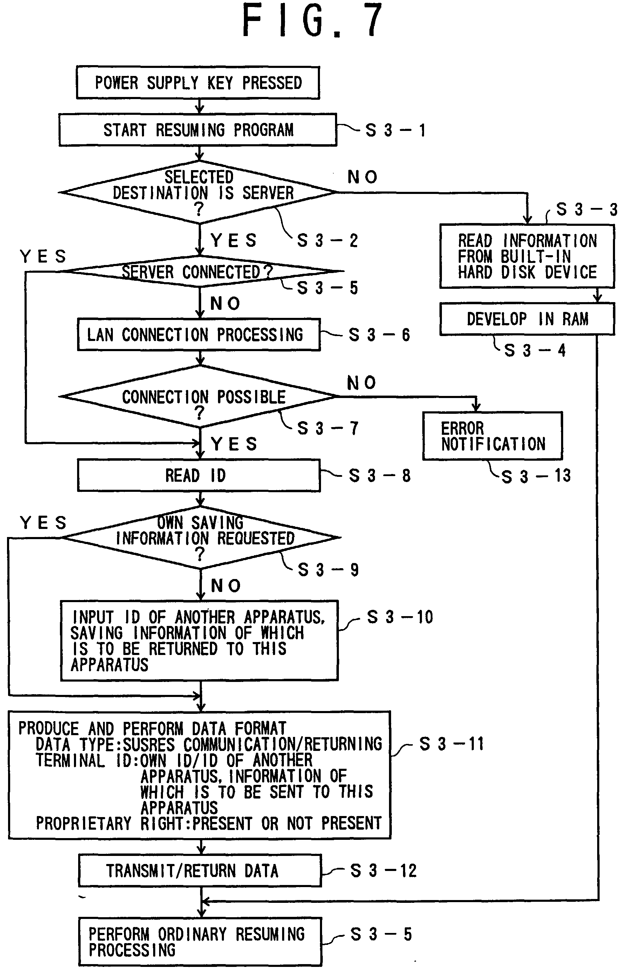

FIG.7 shows a processing flowchart of resuming processing of the client terminal apparatus 3 in the embodiment of the present invention.

In the client terminal apparatus 3, when power is supplied through an operation of the inputting and outputting portion 10 by an operator, the BIOS is read from the ROM 7, and predetermined processing for starting is performed. At this time, the resuming program is started (step S3-1).

Then, information for the selected destination for the saving information is acquired. The information for the selected destination for the saving information was, in the suspending processing, stored in a non-volatile storage device, for example, the hard disk drive 9 or the like.

Then, the selected destination for the saving information is determined (step S3-2). In a case where the saving information was stored in the internal hard disk drive 9 in the step S3-2, the saving information is read from the built-in hard disk drive 9 (step S3-3), and is developed in the RAM 8 (step S3-4). Then, ordinary resuming processing is performed (step S3-14).

In a case where the selected destination of the saving information is the server apparatus 4 in the step S3-2, the condition of the connection with the server apparatus 4 is detected (step S3-5).

When the client terminal apparatus 3 is not connected with the server apparatus 4, the LAN connection processing is performed, the network control portion 11 is caused to be connected with the LAN circuits 2, and connection with the server apparatus 4 is performed (step S3-6).

When the connection with the server apparatus 4 is completed in the step S3-6 (step S3-7), the terminal identification number (ID) 25 of this client terminal apparatus 3 is read from the hard disk drive 9 or the ROM 7 (step S3-8). When the saving information to be returned to this client terminal apparatus 3 is not the saving information of this client terminal apparatus 3, the terminal identification number of another client terminal apparatus, the saving information of which is to be returned to this client terminal apparatus 3, is input through the inputting and outputting portion 10 by an operator (steps S3-9, S3-10).

When the terminal identification number of the other client terminal apparatus, the saving information of which is to be returned to this client terminal apparatus 3, is input in the step S3-10, then, transmission data 23 for requesting the server apparatus 4 to perform the resuming processing is produced and is transmitted to the server apparatus 4 (step S3-11).

The transmission data has a data arrangement approximately the same as that of the transmission data 23 used when the suspending processing is performed, as shown in FIG.4. Information indicating that the transmission data is the data for the resuming processing is set in the identification flag 24 shown in FIG.4. The terminal identification number 25 indicates the identification number of this client terminal apparatus 3 or the identification number of the other client terminal apparatus input in the step S3-10. Further, in the transmission data, the proprietary-right flag 26 is set as either effective or ineffective. In the resuming processing, the data group 27 is not necessary in the transmission data.

When receiving the saving information which has been sent from the server apparatus 4 in accordance with the transmission data transmitted to the server apparatus 4 in the step S3-11, the client terminal apparatus 3 develops the saving information in the RAM 8 and performs the ordinary resuming processing (steps S3-12, S3-14).

When connection with the LAN circuits 2 cannot be performed in the step S3-7, an error notification is indicated on the inputting and outputting portion 10, and an operator is informed that the saving information has not been obtained (step S3-13).

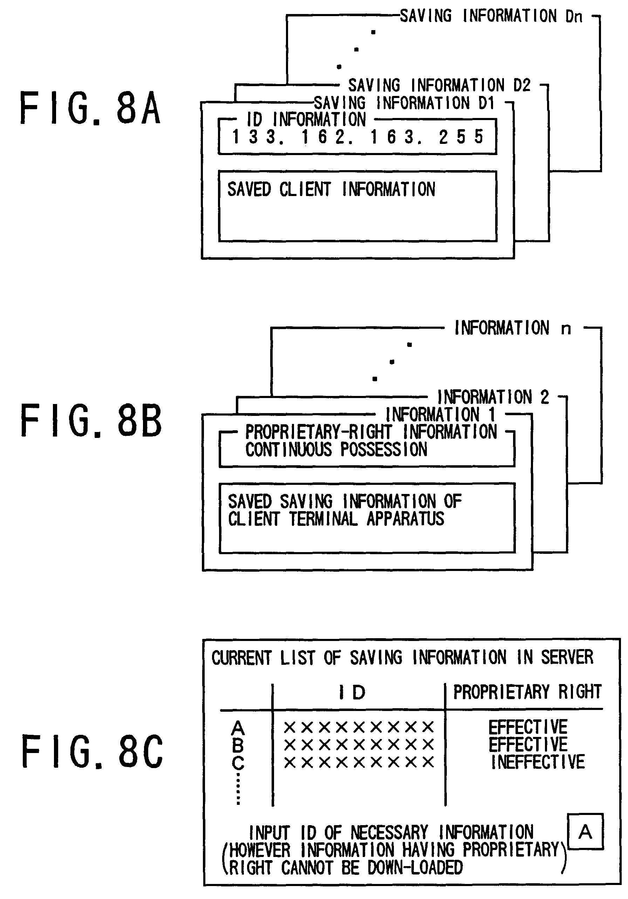

FIGS.8A, 8B and 8C shows operation explanation diagrams in the resuming processing. FIG.8A shows identification number indication pictures, FIG.8B shows proprietary-right flag indication pictures, FIG.8C shows an ID number list indication picture.

When the client terminal apparatus 3 requests the saving information of another client terminal apparatus in the step 3-9, by requesting the server apparatus 4 to transmit the ID number table 28, the ID number table 28 stored in the server apparatus 4 is transmitted to the client terminal apparatus 3.

When the inputting and outputting portion 10 of the client terminal apparatus 4 is operated by an operator and the identification number indication picture is selected, as shown in FIG.8A, for each one of the saving information D1 through Dn, the terminal identification numbers of the client terminal apparatuses which have the saving information in common are indicated.

Further, as a result of the inputting and outputting portion 10 being operated by an operator, as shown in FIG.8B, for each one of the saving information D1 through Dn, the state of the proprietary-right flag (effective or non-effective) set for the saving information is indicated in a respective one of the proprietary-right flag indication pictures.

Further, as a result of the ID number list indication picture being selected, as shown in FIG.8C, for the saving information D1 through Dn, the terminal identification numbers and the states of the proprietary-right flags are indicated, respectively.

One(s) of the above-mentioned pictures is(are) selected, the information for the necessary saving information is obtained, and the identification number therefor to be input in the step S3-10 is selected and input.

The resuming processing of the server apparatus 4 will now be described.

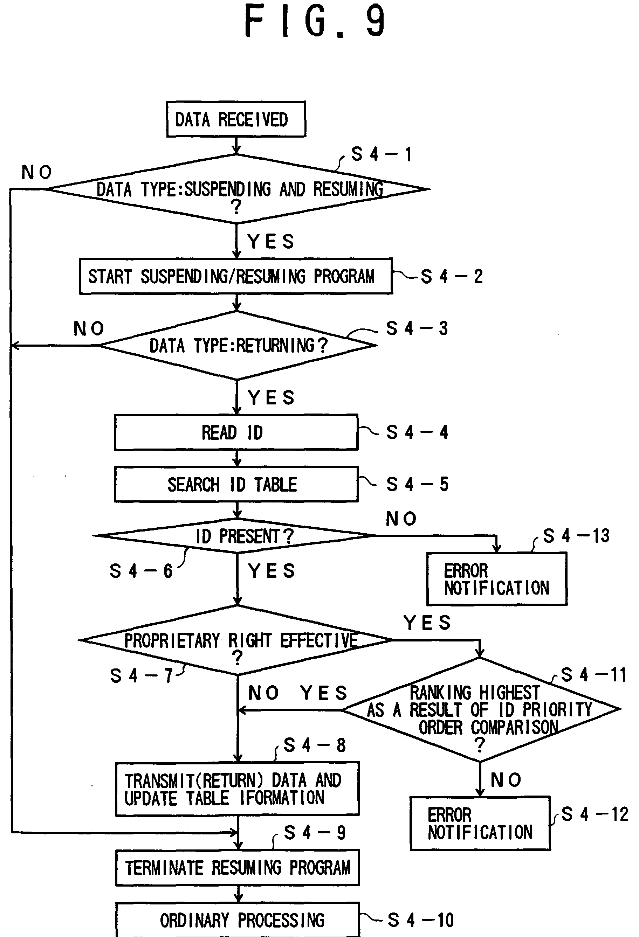

FIG.9 shows a processing flowchart of the resuming processing of the server apparatus 4 in the embodiment of the present invention.

When the transmission data 23 is supplied to the server apparatus 4 through the LAN circuits 2 from the client terminal apparatus 3, the server apparatus 4 refers to the identification flag 24 of the transmission data 23 and detects whether or not the identification flag 24 indicates the suspending/resuming processing (step S4-1).

When the suspending/resuming processing is detected in the step S4-1, the suspending/resuming program is started (step S4-2).

When the suspending/resuming program is started in the step S4-2, it is determined whether the identification flag 24 indicates the resuming processing or the suspending processing (step S4-3).

When it is determined that the identification flag 24 indicates the resuming processing in the step S4-3, the terminal identification number 25 of the transmission data is read (step S4-4). Then, the ID number table 28 such as that shown in FIG.6A stored in the hard disk drive 9 or the like is referred to, and the terminal identification number the same as the terminal identification number 25 read in the step S4-4 is searched for (step S4-5).

When the terminal identification number the same as the terminal identification number 25 read from the transmission data 23 in the step S4-4 is present in the ID number table 28 as a result of the ID number table 28 being searched in the step S4-5, then the state of the proprietary-right flag 26 of this terminal identification number 25 in the ID number table 28 is determined (S4-7).

When it is determined that the state of the proprietary-right flag 26 is ineffective in the step S4-7, the pointer of the ID number table 28 for the terminal identification number is read, the saving information stored in the area corresponding to the read pointer in the saving information storage area 29 is read and is transmitted to the client terminal apparatus 3 through the LAN circuits 2, and the contents of the ID number table 28 corresponding to the contents of the transmission data 23 are updated in accordance with the contents of the transmission data 23 (step S4-8).

When the saving of the contents of the ID number table 28 is updated, the server apparatus 4 terminates the suspending/resuming program and returns to perform ordinary processing (steps S4-9, S4-10).

When the state of the proprietary-right flag 26 searched for in the step 4-7 is effective, the priority order of the group of the client terminal apparatuses having the different terminal identification numbers and having the same saving information in common in the case where the state of the proprietary-right flag 26 of the saving information is effective and the saving information is held by the group of the client terminal apparatus in common, in accordance with the predetermined rule previously set in the server apparatus 4 (step S4-11). When the priority of the client terminal apparatus 3 is highest among the priorities of the group of the client terminal apparatuses, the pointer corresponding to the terminal identification number is read, the saving information stored in the area pointed to by the read pointer in the saving information storage area 29 is read and is transmitted to the client terminal apparatus 3 through the LAN circuits 2, and the contents of the ID number table 28 corresponding to the contents of the transmission data 23 are updated in accordance with the contents of the transmission data 23 (step S4-8).

When the priority of another client terminal apparatus is highest among the priorities of the above-mentioned group of the client terminal apparatuses, an error notification is transmitted to the client terminal apparatus 3 (step S4-12).

When the identification the same as the identification included in the transmission data 23 is not present in the ID number table 28, the saving information has not been saved in the server apparatus 4 for the client terminal apparatus 3, and an error notification is transmitted to the client terminal apparatus 3 (step S4-13).

Thus, the saving information is transmitted from the server apparatus 4 to the client terminal apparatus 3, the saving information transmitted from the server apparatus 4 is developed in the RAM 8 as described above, and the state of the RAM 8 is returned to the state present before the power supply was disconnected.

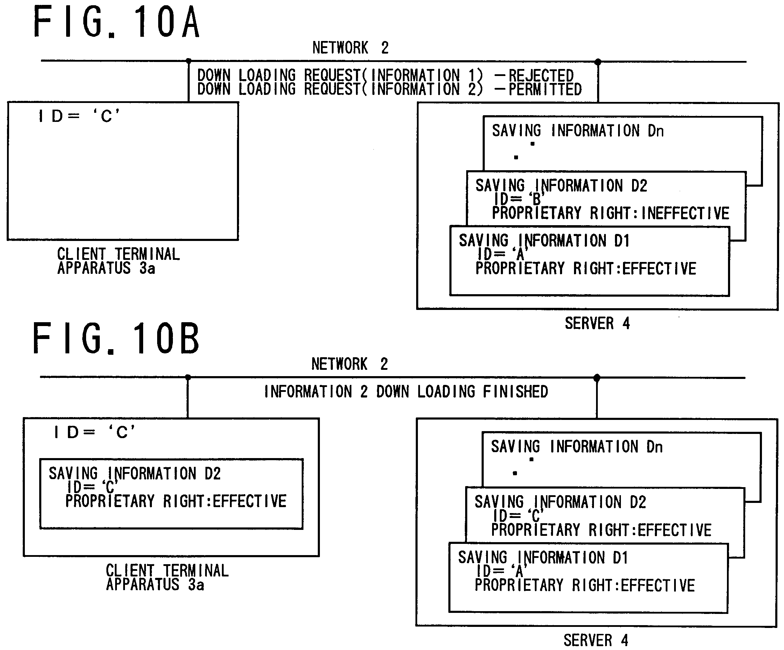

FIGS.10A and 10B show operation explanation diagrams in the embodiment of the present invention. In the figures, the same reference numerals are given to parts/components/units which have the same arrangements of those shown in FIG.1 and the descriptions thereof will be omitted.

For example, as shown in FIG.10A, when the client terminal apparatus 3a having the identification number 'C' requests the server apparatus 4 to transmit the saving information D1 to the client terminal apparatus 3a, because the state of the proprietary-right flag of the saving information D1 is effective for the identification number 'A', the saving information D1 is not transmitted to the client terminal apparatus 3a having the identification number 'C'.

At this time, because the state of the proprietary-right flag of the saving information D2 in the server 4 is ineffective, the saving information D2 can be transmitted to the client terminal apparatus 3a having the identification number 'C' as well as the client terminal apparatus having the identification number 'B'. Accordingly, the saving information D2, the state of the proprietary-right of which is ineffective, is held by a plurality of the client terminal apparatuses in common.

Further, as shown in FIG.10B, when the client terminal apparatus 3a having the identification number 'C' requests the server apparatus 4 to transmit the saving information D2 to the client terminal apparatus 3a having the identification number 'C', because the state of the proprietary-right flag of the saving information D1 is effective only for the identification number 'C', the server apparatus 4 transmits the saving information D2 only to the client terminal apparatus 3a having the identification number 'C'.

In the embodiment, when the power supply in the client terminal apparatus 3 is disconnected, the data in the RAM 8 can be selectively stored in the hard disk drive 9 of the client terminal apparatus 3 which is a non-volatile storage device or the hard disk drive 15 in the server apparatus 4. Therefore, the data in the RAM 8 can be saved in an appropriate storage device in accordance with the current situation. In a case where a situation that the client terminal apparatus 3 cannot be connected with the server apparatus 4 is previously expected, when the power supply is disconnected, the data in the RAM 8 of the client terminal apparatus 3 is saved in the hard disk drive 9 of the client terminal apparatus 3. Thus, even when the connection with the server apparatus 4 cannot be performed, the necessary data can be obtained from the hard disk drive 9 of the client terminal apparatus 3 when the client terminal apparatus 3 starts, and the reliability of the system can be improved.

Further, the present invention is not limited to the above-described embodiment, and variations and modifications may be made without departing from the scope of the present invention.

The contents of the basic Japanese Patent Application No.9-304361, filed on November 6, 1997, are hereby incorporated by reference.

## Claims

1. An information protection method for a network system (1) in which a client terminal (3) and a server (4) are connected through a network (2), characterized in that:
saving information (27) of said client terminal is saved in either said client terminal or said server selectively, when said client terminal stops; and
the saving information saved in either said client terminal or said server selectively is returned to said client terminal when said client terminal starts.

2. The information protection method for a network system, according to claim 1, characterized in that identification information (25) for identifying said client terminal is attached to the saving information and said saving information is transmitted to said server, when said server is selected to have said saving information saved therein.

3. The information protection method for a network system, according to claim 1, characterized in that:
identification information (25) and the saving information (27) are included in a command which causes the saving information to be saved when said client terminal stops and said command is transmitted to said server from said client terminal; and
a command, which causes the saving information to be returned to said client terminal when said client terminal starts, includes the identification information and said command is transmitted from said client terminal to said server.

4. The information protection method for a network system, according to claim 1, characterized in that a plurality of such client terminals have the saving information in common.

5. The information protection method for a network system, according to claim 1, characterized in that:
proprietary-right information (26), for setting whether or not the saving information is held in said server when said client terminal stops, is transmitted to said server; and
said server determines whether or not the saving information is transmitted to said client terminal, in accordance with the proprietary-right information.

6. An information processing apparatus, having a client terminal (3) connected therewith through a network (2) and performing communication with said client terminal, characterized in that said apparatus comprises:
network controlling means (11) for controlling connection with said client terminal;
saving information storing means (15) for storing saving information (27) of said client terminal, said saving information being supplied through said network controlling means from said client terminal; and
selecting means (12) for selecting whether the saving information is to be saved in said client terminal or in said saving information storing means.

7. An information processing apparatus, having a server (4) connected therewith through a network (2) and performing communication with said server, characterized in that said apparatus comprises:
saving information transmitting means (5) for transmitting to said server a saving command for saving saving information (27) when said apparatus stops, the saving command including identification information (25) and the saving information; and
returning means (5, 6) for transmitting a returning command to said server for returning the saving information to said apparatus when said apparatus starts, said returning command including the identification information (25), and returning said apparatus to the condition present before said apparatus stopped, in accordance with the saving information which is supplied in response to the returning command from said server.

8. A data saving method for an apparatus (3) to be connected with another apparatus (4), characterized in that:
a destination in which data is to be saved is selected from between said apparatus (3) or said another apparatus (4);
data to be saved (27) is transmitted to said another apparatus (4) when said another apparatus (4) is selected as the destination; and
turning off of power supply in said apparatus (3) is performed after the transmission of the data to be saved is completed.

9. The data saving method, according to claim 8, characterized in that:
connection processing is performed when said another apparatus (4) is selected as the destination and said apparatus (3) is not connected with said another apparatus (4);
data to be saved is transmitted to said another apparatus (4) after the connection processing is completed; and
said apparatus (3) is disconnected from said another apparatus (4) after the data transmission is completed.

10. The data saving method, according to claim 8, characterized in that:
data to be saved is stored in a non-volatile memory (9) provided in said apparatus (3) when said apparatus (3) is selected as the destination; and
turning off of the power supply in said apparatus (3) is performed after the storing of the data to be saved is completed.

11. A data returning method for an apparatus (3) to be connected with another apparatus (4), characterized in that:
it is determined, after power supply is turned on in said apparatus (3), whether a destination in which data to be saved (27) has been saved is said apparatus (3) or said another apparatus (4); and
said apparatus (3) requests said another apparatus (4) to transmit the data to be saved to said apparatus (3) when the destination in which the data to be saved has been saved is said another apparatus (4).

12. The returning method, according to claim 11, characterized in that the data to be saved is read out from a non-volatile memory (9) provided in said apparatus (3) when the destination in which the data to be saved has been saved is said apparatus (3).
